# EUROPEAN PATENT APPLICATION

(11) **EP 1 650 546 A1**
(43) Date of publication of application: **26.04.2006**
(21) Application number: 05256501.7
(22) Date of filing: 20.10.2005
(51) Int. Cl.: G01N 21/31, G01N 21/35, G01N 21/64, G01N 23/223

(54) **Method and apparatus for identifying, analyzing and authenticating objects, including chemicals, using multiple spectroscopic techniques**

(30) Priority: 22.10.2004 US 621094 P
(71) Applicant: Keymaster Technologies, Inc., Kennewick, WA 99336 (US)
(72) Inventor: Price, L. Stephen, Richland, WA 99352 (US); Shannon, Robert F Jr., Duluth, GA 30097 (US); Kaiser, Bruce J., Richland, WA 99352 (US); Himpler, Hilary A., Port Washington, NY 11050 (US)
(74) Representative: Brunner, Michael John

(57) **Abstract**

An integrated apparatus capable of both molecular and elemental spectroscopic analysis includes a molecular spectroscopic analysis system, e.g., a NIR spetroscopic system, a UV spectroscopic system or a laser-induced fluorescence system, an elemental spectroscopic analysis system, e.g., an X-ray fluorescence spectroscopic system, and a computational and analysis module. The computational and analysis module is coupled to the molecular spectroscopic analysis system and to the elemental spectroscopic analysis system. The integrated apparatus also includes a display device coupled to the computational and analysis module.

## Description

**CROSS REFERENCE TO RELATED APPLICATIONS** This invention relates generally to apparatus and methods for identification, analysis and authentication. More particularly, the invention relates to apparatus and methods for detecting the molecular composition of an object (defined herein to include the object in a solid, liquid or gas form) using a suitable molecular spectroscopic method and simultaneously (or near simultaneously) detecting an element or elements intrinsically present, or extrinsically added, in an object by using a suitable elemental spectroscopic method such as X-ray fluorescence to further identify, analyze and authenticate that object, its type, its composition, its constituents and/or its constituent concentrations. Even more particularly, the invention relates to portable, handheld apparatus and methods for detecting compounds and/or elements intrinsically present, or extrinsically added, in an object to identify, analyze and authenticate an object.

There has been significant interest in apparatus and methods for identifying, authentication and verifying various articles, products or objects, such as explosives, chemical weapons, pharmaceuticals, paint, ceramics, plastics, packaging, and petroleum products. Known methods for identifying and authenticating objects include using spectroscopic techniques to determine the molecular or elemental composition of objects. Other known methods used to identify and authenticate such objects involve adding and detecting materials like micro particles, bulk chemical substances, and radioactive substances. Similar marking methods include inks that are transparent in visible light are sometimes applied to objects and the presence (or absence) of the ink is revealed by ultraviolet or infrared fluorescence. Other methods include implanting microscopic additives that can be detected optically. Other methods used for identifying and verifying objects include those described in U.S. Patent Nos. 6,106,021, 6,082,775, 6,030,657, 6,024,200, 6,007,744, 6,005,915, 5,849,590, 5,760,394, 5,677,187, 5,474,937, 5,301,044, 5,208,630, 5,057,268, 4,862,143, 4,485,308, 4,445,225, 4,390,452, 4,363,965, 4,136,778, and 4,045,676, as well as European Patent Application Nos. 0911626 and 0911627, the disclosures of which are incorporated herein by reference.

As well, there has been significant interest in using similar technologies to collect and record data about an object, thereby tracking and tracing objects to prevent loss or counterfeiting. Such "anti-counterfeiting technologies" have run the gamut of the spectrum and have included bar codes and direct parts marking (DPM) technologies. Other "anti-counterfeiting technologies" have included using pigments and colors, genetic analyzations based on DNA, holographs, RF identifiers, and the like.

Unfortunately, many of the methods and apparatus used for identifying, authenticating and/or tracking/tracing objects are unsatisfactory for several reasons. First, they are often difficult and time-consuming. In addition, many other technologies involve destructive testing, where all or a portion of the object to be analyzed is destroyed by the analysis. In many instances, a sample of the object, or the object itself, must be sent to an off-site laboratory for analysis. In other instances, the apparatus are often expensive, large, and difficult to operate. In yet other instances, these technologies are limited by support equipment or lighting variations. Further, these technologies require extremely time-consuming, difficult and exacting sample preparation techniques in order to provide repeatable results. And in yet other instances, the apparatus posts a significant number of false results or 'false alarms', for example, false positives or false negatives.

Known methods for identifying and authenticating objects include the use of multiple spectroscopic techniques. In these instances, more than one spectroscopic technique is used to verify and support the results of the other spectroscopic techniques. The results of each technique are typically analyzed by a human, such as a laboratory technician, or by a person using software or algorithms in an apparatus, such as a computer, separate from the apparatus used to conduct the spectroscopic analysis. This method is unsatisfactory for multiple reasons. First, the method can be extremely time consuming. In addition, the method can be extremely labor intensive, and often requires a sterile laboratory environment. Further, the apparatus to conduct such analysis is often expensive, large, heavy, non-portable, and/or subject to false readings if not operated with extreme care, or operated in a sterile laboratory environment. Even further, the results of this method are subject to errors and non-repeatability based on the skill of the human(s) conducting the method. Common repeatability problems include changes, whether intentional or unintentional, in the object to be analyzed between the application of two or more spectroscopic techniques, errors in human calculations or assumption, errors in software or algorithms used outside of the devices conducting the spectroscopic analysis, errors in sample preparation, and/or errors in interpreting data between multiple spectroscopic techniques.

The known anti-counterfeiting technologies are also unsatisfactory because they require "line-of-sight" for analysis. This line of sight requirement entails that the apparatus must be able to "see" the taggant or object in order to detect and authenticate it. This can be detracting when it would be desirable to detect and authenticate the object without having direct contact with the object, e.g., such as when the object, product and/or taggant is highly toxic, is located in the middle of large package with packaging and labels "covering" the object, or when the object, product or taggant is covered with a coating, such as a pharmaceutical tablet.

### BRIEF DESCRIPTION OF THE INVENTION

In one aspect, an apparatus and method are provided in which one or more compounds are detected by a suitable spectroscopic method and simultaneously (or near simultaneously) one or more elements and/or taggants that are intrinsically located, or extrinsically placed, in an object are detected by another suitable spectroscopic technique, such as x-ray fluorescence analysis, to identify or authenticate or track/trace the object, or its point of manufacture. The taggant can be an intrinsic part of the object, can be manufactured as part of the object, or the taggant can be placed into a coating, packaging, label, or otherwise embedded within or onto the object for the purpose of later verifying the presence, concentration or absence of the taggant element(s) or compound(s) using the appropriate spectroscopic technique(s). Molecular or chemical composition of all or selected constituents of the object or product is determined with a suitable second spectroscopic method. Substantially simultaneous detection of the molecular and elemental composition of the object can be used alone or together for positive identification and/or authentication of the object. Substantially simultaneous detection of the molecular and elemental composition of the object can also be used in combination with other anti-counterfeiting technologies.

By using a suitable spectroscopic method to ascertain chemical molecular composition in combination with a suitable elemental spectroscopic technique, the apparatus and methods of the invention are simple and easy to use, as well as provide detection by a non line-of-sight method. The apparatus and methods can be used to identify the object, detect the object's composition and/or concentration, track and trace objects, as well as to establish the origin of objects, their point of manufacture, and their authenticity. The invention is extremely advantageous because it is difficult to replicate, simulate, alter, transpose, or tamper with. Further, it can be easily recognized by a user in either overt or covert form, easily verified by a manufacturer or issuer, and easily applied to various forms of media in the objects, without the limitations experienced by current anti-counterfeiting technologies.

### BRIEF DESCRIPTION OF THE DRAWINGS

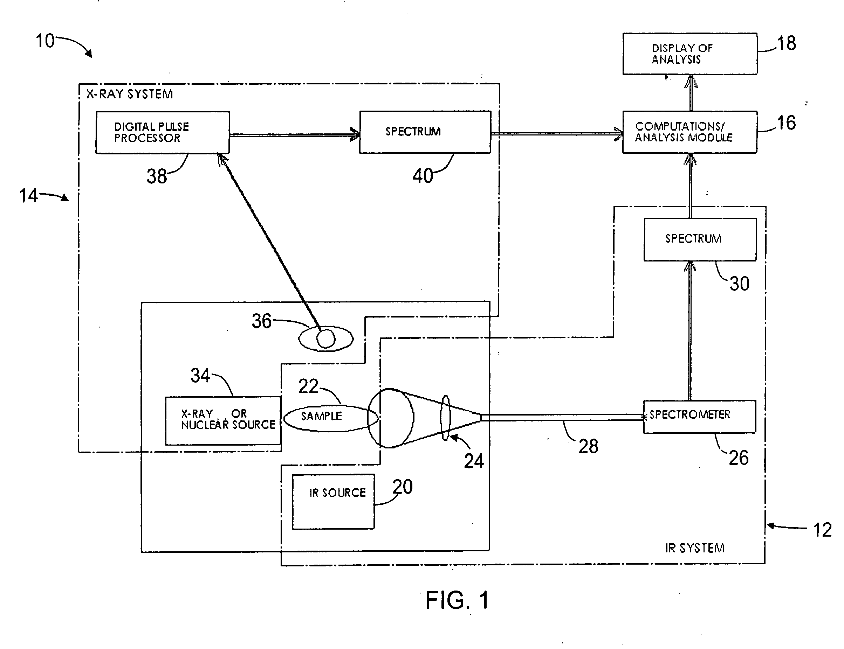

Figure 1 is a schematic illustration of an apparatus for both molecular and elemental spectroscopic analysis in accordance with an embodiment of the present invention.

### DETAILED DESCRIPTION OF THE INVENTION

The following description provides specific details in order to provide a thorough understanding of the invention. The skilled artisan will understand, however, that the invention can be practiced without employing these specific details. Indeed, the invention can be practiced by modifying the apparatus and method and can be used in conjunction with apparatus and techniques conventionally used in industry. For example, the invention is described in Example 1 with respect to apparatus and methods for identifying and authenticating pharmaceuticals using their intrinsic composition irrespective of their packaging. The invention could be modified to be used with the addition of extrinsic taggants in the packaging and/or in the object as described in Example 2. Indeed, the invention described could be easily modified to be used in combination with, in place of, or in addition to other anti-counterfeiting technologies.

The invention uses a suitable spectroscopic method, such as laser-induced fluorescence, including infrared (near, mid, or far), or ultraviolet spectroscopy to determine the chemical molecular composition of an object. In other embodiments, arc-induced fluorescence or filament-induced fluorescence is used. These methods depend on evaluation of bond energies (often referred to as stretches) associated with specific chemical moieties, such as carbonyl groups (C=O), nitride groups (N-H), carbon-hydrogen groups (C-H), hydrogen-hydrogen groups (H-H), etc., to determine the molecular makeup of a chemical compound. A combination of stretches produces a spectrum that correlates with the molecular composition of a chemical or series of chemicals within the same object or product.

The suitable spectroscopic method is selected based on the specific field of application and the typical chemical constituents used in that application. For example, near infrared spectroscopy (NIR) is used extensively in the pharmaceutical and polymers industry for materials analysis. NIR relies on vibrational overtones and combinations of fundamental stretching vibrational modes of the chemical moieties to produce a distinctive spectrum that qualitatively identifies the molecular species present in a sample or object. NIR, in contrast to midrange infrared spectroscopy, requires minimal to no sample preparation, is nondestructive and is capable of detection through glass and packaging materials. As will be shown below, these features make NIR, for example, an appropriate technique for field portable detection used in combination with x-ray fluorescence analysis.

Quantitative molecular analysis using NIR is possible through the use of modern software algorithms, but in some cases, a complex combination of molecular species, thin samples, glossy surface finishes of objects, changes in sample temperature or moisture in the objects makes identification of the individual chemical species by NIR alone impossible or extremely difficult and time consuming, particularly in a field environment. Given these possible problems, in order to increase the probability of identification, and reduce the probability of false positives or false negatives, it is most desirable to couple NIR with another method to further verify the results of either a qualitative identification or quantitative analysis of identification and concentration.

The invention also uses a suitable spectroscopic technique, such as x-ray fluorescence analysis, to detect at least one element or elemental taggant intrinsically, or extrinsically, present in the material of an object. With x-ray fluorescence (XRF) analysis, x-rays are produced from electron shifts in the inner shell(s) of atoms of the taggants or elements and, therefore, are not affected by the form (chemical bonding) of the article being analyzed. The x-rays emitted from each element bear a specific and unique spectral signature, allowing one to determine whether or not that specific element or taggant is present in the product or article.

As part of authenticating or analyzing an object, it may be useful to add one or more molecular or elemental taggant(s) to the object, including the object's coatings, adhesives, inks, and/or packaging. The taggant can be an intrinsic part of the object, can be manufactured as part of the object, or the taggant can be placed into a coating, packaging, label, or otherwise embedded within or onto the object for the purpose of later verifying the presence, concentration or absence of the taggant element(s) or compound(s) using the appropriate spectroscopic technique(s).

After at least one taggant is extrinsically or intrinsically present in the target object(s), the taggant(s) is detected to identify or verify the target material using a first spectroscopic technique, such as XRF analysis, and further substantiated by using a second spect roscopic method, such as NIR or UV spectroscopy for molecular identification.

In the event that only intrinsic taggants or elements are acceptable in some specific applications, such as chemical weapon detection, molecular identification and elemental identification and analysis are used in combination, or one at a time, to substantiate the results of each technique. This is illustrated in Example 3 shown below.

The methods used to interpret and analyze the x-rays and the absorbance or transmittance data of molecular spectroscopic methods depend, in large part, on the algorithms and software used. Thus, methods are adopted to employ software and algorithms that will consistently perform the absorbance or transmittance analysis and XRF detection. Additional algorithms and software are coded to enable each method to take advantage of the information provided by the other such that a more reliable result is determined.

Although specific spectroscopic techniques are described herein for illustrative purposes, the invention is not limited to any specific spectroscopic technique. Furthermore, the invention is not limited to any specific XRF analysis. Any type of XRF, such as total reflection x-ray fluorescence (TXRF), can be employed in the invention.

In one aspect of the invention, the apparatus and method used identify an object or article once it has been tagged. The ability to invisibly tag an article and read the tag, especially through a non line-of-sight method, provides an invaluable asset in any industry that authenticates, verifies, tracks, labels, or distributes goods of any kind. Indeed, having an invisible taggant(s) could further prevent copying and counterfeiting of goods. In another aspect of the invention, the apparatus and method of the invention could be used for these same purposes, but for those products that have the desired taggant already located therein.

The invention includes a method for authenticating an object and/or identifying an object, its type, its composition, its constituents and/or its constituent concentrations, that includes the steps of:
analyzing an object for its molecular composition using one or more suitable molecular spectroscopic techniques, such as near infrared analysis;
analyzing an object for its elemental composition using one or more suitable elemental spectroscopic technique, such as x-ray fluorescence analysis;
conducting the analysis using each spectroscopic technique simultaneously, or near simultaneously; and
applying firmware and/or software algorithms to compare the results of each spectroscopic technique, and/or determine and/or substantiate the authenticity, identity, type, composition, constituents, and/or constituent concentrations of the object using inputs, whether null or not, from both the molecular and elemental spectroscopic techniques.

In one embodiment of the invention, the method includes additional means for authentication, such as a bar code, a two-dimensional symbol, or three-dimensional symbol.

In one embodiment of the invention, the method includes adding one or more elemental or molecular taggant(s) to the object being authenticated and/or identified, and/or adding the taggant(s) to the peripherals of the object, such as its packaging or coating.

In one embodiment of the invention, the method includes algorithm(s) that use spectral data from one or more of the spectroscopic techniques to compare the results of each spectroscopic technique, and/or determine and/or substantiate the authenticity, identity, type, composition, constituents, and/or constituent concentrations of the object using inputs, whether null or not, from both the molecular and elemental spectroscopic techniques.

In one embodiment of the invention, the method includes starting algorithm(s) to compare the results of each spectroscopic technique, and/or determine and/or substantiate the authenticity, identity, type, composition, constituents, and/or constituent concentrations of the object using inputs, whether null or not, from both the molecular and elemental spectroscopic techniques, in real time with the analysis of the object using the two or more spectroscopic techniques.

In one embodiment of the invention, the method includes starting algorithm(s) to compare the results of each spectroscopic technique, and/or determine and/or substantiate the authenticity, identity, type, composition, constituents, and/or constituent concentrations of the object using inputs, whether null or not, from both the molecular and elemental spectroscopic techniques, within 15 minutes of initiating the analysis of the object using the two or more spectroscopic techniques.

The invention includes a single, integrated device capable of both molecular and elemental spectroscopic analysis that includes:
a single unit with the capacity to use each spectroscopic technique independently or together;
integrated electronics and/or software enabled to make decisions based on the data received by one or both of the molecular and elemental spectroscopic techniques; and
algorithm(s) that automatically compare inputs from both the molecular and elemental spectroscopic techniques, and/or automatically determine the authenticity, identity, type, composition, constituents, and/or constituent concentrations of an object using inputs, whether null or not, from both the molecular and elemental spectroscopic techniques.

In one embodiment of the invention, the device can be used effectively outside of a laboratory environment, whether fixed or mobile.

In one embodiment of the invention, the device is handheld and/or portable, having a weight, size and/or shape that enables the device to be conveniently carried, transported and used by one normal person.

In one embodiment of the invention, the device uses laser induced fluorescence, arc-induced fluorescence, or filament-induced fluorescence spectroscopy and x-ray fluorescence spectroscopy. In another embodiment of the invention, the device uses near infrared spectroscopy and x-ray fluorescence spectroscopy.

Figure 1 is a schematic illustration of an apparatus 10 for both molecular and elemental spectroscopic analysis in accordance with an exemplary embodiment of the present invention. Particularly, apparatus 10 includes a NIR system 12 and an XRF system 14 that are connected to a computations/analysis module 16. The resultant analysis from analysis module 16 is displayed on display screen 18. Computations/analysis module 16 includes a processor programmed to compare inputs from NIR analysis system 12 and XRF analysis system 14.

NIR system 12 includes an infrared generating source 20 which is directed at a sample 22. The results of the illumination of sample 22 is collected by IR collection optics 24 which is then transmitted to the IR spectrometer 26 using fiber optics 28, which in one embodiment, is optimized for the IR wavelengths. IR spectrometer 26 processes the IR light into a digitized spectrum 30 which is then sent to the computations/analysis module 16 for analyzing and integration with XRF system 14 data.

XRF system 14 includes an X-ray or nuclear generating source 34 which is directed at sample 22. The results of this illumination of sample 22 is collected by an X-ray or nuclear detector 36 and transmitted to a digital pulse processor 38 for transmission of a resultant digital spectrum 40 which is then sent to computations/analysis module 16. Computations/analysis module 16 integrates the XRF system 14 data with the NIR system 12 data to provide a resultant composite analysis to the operator through display 18.

The invention will be further described by reference to the following three hypothetical examples which are presented for the purpose of illustration only and are not intended to limit the scope of the invention.

### EXAMPLE 1

Simultaneous use of or alternating between NIR and XRF detection can enable a more complete identification of a totally formulated pharmaceutical product with or without extrinsic addition of a taggant. Using the combination of NIR and XRF the molecular identity of the active pharmaceutical ingredient and its potency (concentration) can be determined with additional confirmation of identity based on analysis of elemental composition. The method showing greatest sensitivity or the lowest detection limits relevant to the pharmaceutical formulation may be employed first to establish a class of potential compounds to be identified. These will include both the active ingredient(s) and the excipients or inactive ingredients.

Once the most sensitive method has established the classes of compounds present, the second method will provide additional elemental or molecular data to aid in a reliable identification of the compounds and chemical species and elements particular to the object.

A specific example follows, using two common prescription pharmaceuticals.

Aciphex® (Eisai Co., co-marketed in U.S. with Janssen Pharmaceuticals, Inc.) is a proton pump inhibitor to suppress acid for relief of heartburn in erosive GERD. Information below is taken from the prescription monograph. The active ingredient in Aciphex® is rabeprazole sodium, a substituted benzeimidazole that inhibits gastric acid secretion. It is known chemically as 2-[[[4-(3-methoxypropoxy)-3-methyl-2-pyridinyl]-methyl]sulfinyl]-1H-benzimidazole sodium salt. It has an empirical formula of C₁₈H₂₀N₃NaO₂S. In this example NIR would detect the concentration of Aciphex® and XRF would detect Sulfur as an added confirmation of the specific molecule. Additionally Aciphex® is supplied as 20mg delayed release enteric-coated tablets for oral administration. Aciphex® is composed of the active, rabeprazole sodium, and the inactive ingredients carnauba wax, crospovidone, diacetylated monoglycerides, ethylcellulose, hydroxpropyl cellulose, hydromellose phthalate, magnesium stearate, mannitol, sodium hydroxide, sodium stearyl fumarate, talc, titanium dioxide, and yellow ferric oxide as a coloring agent. Further authentication can be done by identifying components among the inactive ingredients. In this case, NIR would detect the oxides and XRF would detect titanium and iron. It is likely that XRF would have better sensitivity to iron than NIR to yellow ferric oxide. XRF may also have better sensitivity to Titanium than NIR to titanium dioxide depending on instrumental set ups and interfering components.

Augmentin® (GlaxoSmithKline, inc.) is "an oral antibacteriai combination consisting of the semi synthetic antibiotic amoxicillin and the β-lactamase inhibitor, clavulanate potassium." The amoxicillin molecular formula is C₁₆H₁₉N₃O₅3H₂O with a molecular weight of 419.46. The clavulanate potassium molecular formula is C₈H₈KNO₅ and the molecular weight is 237.25" (16). Again NIR would detect the active and XRF would detect potassium (K), as added confirmation of the active. Inactive ingredients in the adult dose tablets include: colloidal silicon dioxide, hydroxypropyl methylcellulose, magnesium stearate, microcrystalline cellulose, polyethylene glycol, sodium starch glycolate and titanium dioxide. NIR would detect most of the added inactive compounds. Magnesium, sulfur, potassium and titanium are evident in the Augmentin® XRF spectra. In this example NIR would be used to determine the concentrations of most of the components, however the titanium dioxide level would likely be determined by XRF.

### EXAMPLE 2

Using Example 1 as a starting point, an elemental signature or taggant can be introduced into the formulated pharmaceutical product and its packaging to provide further identification of another counterfeiting activity, diversion. Diversion involves the separation of an authentic product from its authentic packaging and use of the authentic packaging for counterfeit product or the use of potentially adulterated or diluted product in authentic packaging.

As an example, the interaction of the technologies would work as follows. A taggant could be incorporated into the packaging; XRF has the capability to identify the specific taggant. NIR would identify the pharmaceutical product and XRF would validate the analysis. In this way, the combined instrument would provide authentication of both the product and the security taggant. Data and spectral comparisons using the suitable spectroscopic method and the identification of the taggant system included in the package can be achieved through modern software algorithms for each method. Additional firmware and software algorithms are used to validate the data from each system and make a more reliable decision about whether or not the product and its packaging are authentic or counterfeit.

### EXAMPLE 3

Use of a suitable spectroscopic method in combination with XRF can lead to positive identification of a chemical agent used as a chemical weapon. Chemical agents include nerve agents, blister agents and choking agents. The individual compounds within each class have similar molecular and elemental compositions and thus may not be positively identified in the field using a single method.

Typical methods currently available lead to false positives since many of the detectors used are sensitive to common field interferents such as kerosene vapor, diesel fuel and gasoline exhaust. Some of these methods use infrared spectroscopy or flame ionization detection alone to attempt chemical weapon characterization, but in testing, these methods exhibit a high incidence of false positives.

By using a spectroscopic method to identify molecular species in combination with elemental analysis via XRF, the common interferents, though detected, would not be validated and reduce the probability of a false positive. For example, infrared spectroscopy would identify Sample A as a nerve agent, but can not tell the difference between Sample A and gasoline exhaust. A false positive could occur whenever only gasoline exhaust is present. The number of false positives can be reduced by simultaneously detecting the elemental composition of the product, i.e. sulfur, phosphorus, arsenic, fluorine, chlorine. That data is then referred to a set of software algorithms, which can determine whether or not the elemental composition and the molecular identification represent a match to known chemical weapons in their database library. If a match is found both by molecular and elemental analysis a positive result will be indicated.

The following specific example discusses the interaction of the two spectroscopic technologies. Chemical agents, such as sulfur mustard (mustard gas) ClCH₂CH₂SCH₂CH₂Cl, can be detected by laser induced fluorescence (LIF). False positives, however, are a problem with such systems, as other compounds have similar signatures. XRF is capable of detecting the ratio of the sulfur (S) to chlorine (CI) in mustard gas in a field portable unit. The merging of XRF and IR would improve reliable identification and reduce false positives in such cases. The merging of these two technologies will improve detection in areas where there is overlapping analytical capability between the two, while maintaining detection in both areas where there is not an overlap. The merged instrument would have a greatly improved range of detection, as well as providing improved detection in the areas where both provide useful information.

While the invention has been described in terms of various specific embodiments, those skilled in the art will recognize that the invention can be practiced with modification within the scope of the claims.

## Claims

1. An integrated apparatus capable of both molecular and elemental spectroscopic analysis, said apparatus comprising:
a molecular spectroscopic analysis system;
an elemental spectroscopic analysis system;
a computational and analysis module coupled to said molecular spectroscopic analysis system and to said elemental spectroscopic analysis system; and
a display device coupled to said computational and analysis module.

2. An apparatus in accordance with Claim 1 wherein said molecular spectroscopic analysis system comprises an infrared spectroscopic system, or an ultraviolet spectroscopic system.

3. An apparatus in accordance with Claim 1 wherein said elemental spectroscopic analysis system comprises an x-ray fluorescence spectroscopic system.

4. An apparatus in accordance with Claim 1 wherein said molecular spectroscopic analysis system comprises a laser induced fluorescence spectroscopic system, an arc-induced fluorescence spectroscopic system, or a filament-induced fluorescence spectroscopic system, and said elemental spectroscopic analysis system comprises an x-ray fluorescence spectroscopic system.

5. An apparatus in accordance with Claim 1 wherein said molecular spectroscopic analysis system comprises a near infrared spectroscopic system and said elemental spectroscopic analysis system comprises an x-ray fluorescence spectroscopic system.

6. An apparatus in accordance with Claim 1 wherein said computational and analysis module comprises a processor programmed to compare inputs from said molecular spectroscopic analysis system and said elemental spectroscopic analysis system.

7. An apparatus in accordance with Claim 6 wherein said computational and analysis module comprises a processor programmed with at least one algorithm to automatically compare inputs from said molecular spectroscopic analysis system and said elemental spectroscopic analysis system.

8. An apparatus in accordance with Claim 1 wherein said apparatus is portable, having a weight and size to enable said apparatus to be transported by a user.

9. A method for analyzing an object to determine at least one of authenticate the object, identify the object, determine the composition of the object, determine the constituents of the object, and determine constituent concentrations of the object, said method comprising the steps of:
analyzing an object for its molecular composition using a molecular spectroscopic analysis system;
analyzing the object for its elemental composition using an elemental spectroscopic analysis system; wherein the molecular spectroscopic analysis system and the elemental spectroscopic analysis system are part of one integrated apparatus;
conducting the analysis using each spectroscopic system substantially simultaneously; and
comparing the results of each spectroscopic system to determine at least one of authenticity, identity, type, composition, constituents, and constituent concentrations of the object.

10. A method in accordance with Claim 9 further comprising attaching at least one of a bar code, a two-dimensional symbol, and a three-dimensional symbol to the object.

11. A method in accordance with Claim 9 further comprising adding at least one of an elemental and a molecular taggant to the object.

12. A method in accordance with Claim 9 further comprising adding a taggant to a peripheral of the object, wherein said peripheral comprises at least on of a packaging of the object and a coating on the object.

13. A method in accordance with Claim 9 wherein the integrated apparatus comprises a computational and analysis module comprising a processor programmed with at least one algorithm to automatically compare inputs from the molecular spectroscopic analysis system and said elemental spectroscopic analysis system.

14. A method in accordance with Claim 13 further comprising starting the at least one algorithm in real time with the analysis of the object using the two spectroscopic systems.

15. A method in accordance with Claim 13 further comprising starting the at least one algorithm within about 15 minutes of initiating the analysis of the object using the two or more spectroscopic systems.

16. An integrated apparatus capable of both molecular and elemental spectroscopic analysis, said apparatus comprising:
a molecular spectroscopic analysis system, said molecular spectroscopic analysis system comprises an infrared spectroscopic system or an ultraviolet spectroscopic system.;
an elemental spectroscopic analysis system, said elemental spectroscopic analysis system comprises an x-ray fluorescence spectroscopic system;
a computational and analysis module coupled to said molecular spectroscopic analysis system and to said elemental spectroscopic analysis system, said computational and analysis module comprises a processor programmed to compare inputs from said molecular spectroscopic analysis system and said elemental spectroscopic analysis system; and
a display device coupled to said computational and analysis module.

17. An apparatus in accordance with Claim 16 wherein said molecular spectroscopic analysis system comprises a laser induced fluorescence spectroscopic system, an arc-induced fluorescence spectroscopic system, or a filament-induced fluorescence spectroscopic system, and said elemental spectroscopic analysis system comprises an x-ray fluorescence spectroscopic system.

18. An apparatus in accordance with Claim 16 wherein said molecular spectroscopic analysis system comprises a near infrared spectroscopic system and said elemental spectroscopic analysis system comprises an x-ray fluorescence spectroscopic system.

19. An apparatus in accordance with Claim 16 wherein said computational and analysis module comprises a processor programmed with at least one algorithm to automatically compare inputs from said molecular spectroscopic analysis system and said elemental spectroscopic analysis system.

20. An apparatus in accordance with Claim 16 wherein said apparatus is portable, having a weight and size to enable said apparatus to be transported by a user.
